# EUROPEAN PATENT APPLICATION

(11) **EP 2 778 598 A1**
(43) Date of publication of application: **17.09.2014**
(21) Application number: 13275062.1
(22) Date of filing: 14.03.2013
(51) Int. Cl.: F41H 7/00, B64C 39/02, F41H 13/00, F42B 12/36

(54) **Apparatus for use on unmanned vehicles**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

Disclosed is a method performed by apparatus. The apparatus comprises a first module (18) and a second module (32). The first module is mounted on an unmanned vehicle (2) and arranged to act upon a payload (16) also mounted on the vehicle (2). The second module (32) is remote from the unmanned vehicle. The method comprises: receiving, by the second module (32), an instruction to activate the payload (16); generating, by the second module (32), a plurality of activation codes and sending those codes to the first module (18); determining, by the first module (18), whether or not each of the received activation codes is valid; and if the codes are valid, activating the payload (16), or, if the codes are not valid, preventing activation of the payload (16). Each code comprises: a time dependent portion, a single-use portion, and an identifier for the unmanned vehicle (2).

## Description

### FIELD OF THE INVENTION

The present invention relates to apparatus for use on unmanned vehicles.

### BACKGROUND

Unmanned aircraft are powered aerial vehicles that do not carry a human operator. They may fly autonomously or be piloted remotely.

A data link employed to facilitate communication between an unmanned aircraft and its operator, e.g. a satellite data-link, may have uncertain performance, availability, and integrity.

In manned armed aircraft, activation of payloads (such as release and control of weapons such as missiles etc.) is typically performed by the airborne operator. Typically, activation of a payload uses a control sequence to release a series of electro-mechanical safety critical switches. The control sequence is usually performed on the aircraft. The data-link employed within a manned aircraft for the performing such a control sequence is typically robust, reliable, and of high integrity relative to a data link used for communication between an unmanned aircraft and its operator.

### SUMMARY OF THE INVENTION

In a first aspect, the present invention provides a method performed by apparatus, the apparatus comprising a first module and a second module, the first module being mounted on an unmanned vehicle and arranged to act upon a payload, the payload being mounted on the unmanned vehicle upon which the first module is mounted and, under an action of the first module, able to be activated, the second module being remote from the unmanned vehicle upon which the first module is mounted. The method comprises: receiving, by the second module, an instruction that the payload is to be activated; in response to receiving the instruction, generating, by the second module, a plurality of activation codes; sending, from the second module to the first module, the plurality of activation codes; determining, by the first module, whether or not each of the received activation codes is valid by performing a validation process; and either, in response to determining that each of the received activation codes is valid, activating, by the first module, the payload, or, in response to determining that one or more of the received activation codes is not valid, preventing or opposing, by the first module, activation of the payload; wherein each of the activation codes comprises a first portion, a second portion, and a third portion; the first portion of an activation code is a dependent upon a time at which that activation code is generated; a second portion of an activation code is a code that, once used to generate an activation code, is prevented from being used to generate a subsequent activation code at least for some period of time; and a third portion of an activation code is an identifier for the unmanned vehicle.

Each of the activation codes may be different to each other activation code.

The second portion of each of the activation codes may be different to the second portion of each of the other activation codes.

The step of generating the plurality of activation codes may comprise, for each activation code, acquiring, by the second module, from a timer operatively coupled to the second module and configured to generate a time incrementing code, as the first portion of that activation code, a time code.

The step of generating the plurality of activation codes may comprise, for each activation code, acquiring, by the second module, from a code repository operatively coupled to the second module, as the second portion of that activation code, a single-use code

The step of generating the plurality of activation codes may comprise, for each single-use code acquired by the second module, preventing or opposing that single-use code being subsequently acquired by the second module at least for some period of time after the acquiring of that single-use code by the second module.

The step of generating the plurality of activation codes may comprise, for each activation code, using information for specifying the unmanned aircraft, acquiring, by the second module from a further code repository operatively coupled to the second module, as the third portion of that activation code, a code that can be used for uniquely identifying the unmanned aircraft.

The step of determining whether or not each of the received activation codes is valid may comprise, in response to receiving the activation codes, acquiring, by the first module from a timer operatively coupled to the first module and configured to generate a time incrementing code, a time code indicative of a time that the activation codes are received by the first module.

The step of determining whether or not each of the received activation codes is valid may comprise, for each activation code, comparing, by the first module, the first portion of that activation code with the acquired time code that is indicative of a time that the activation codes are received by the first module.

The step of determining whether or not each of the received activation codes is valid may comprise, for each activation code, if the comparison indicates that a time period between a time at which that activation code was generated and a time at which that activation code was received by the first module is greater than a predetermined threshold value, identifying that activation code as not valid.

The step of determining whether or not each of the received activation codes is valid may comprise, in response to receiving the activation codes, acquiring, by the first module, from a code repository operatively coupled to the first module, a plurality of predetermined codes.

The step of determining whether or not each of the received activation codes is valid may comprise, for each activation code, comparing, by the first module, the second portion of that activation code with one or more of the acquired plurality of predetermined codes to determine whether or not that second portion is the same as at least one the acquired plurality of predetermined codes.

The step of determining whether or not each of the received activation codes is valid may comprise, for each activation code, if it is determined that the second portion of that activation code is not the same as any of the acquired plurality of predetermined codes, identifying that activation code as not valid.

The step of determining whether or not each of the received activation codes is valid may comprise, in response to receiving the activation codes, acquiring, by the first module, from a code repository operatively coupled to the first module, a single code, the single code being an identifier for the unmanned aircraft.

The step of determining whether or not each of the received activation codes is valid may comprise, for each activation code, comparing, by the first module, the third portion of that activation code with the single aircraft identifier code to determine whether or not that third portion is the same as the single aircraft identifier code.

The step of determining whether or not each of the received activation codes is valid may comprise, for each activation code, if it is determined that the third portion of that activation code is not the same as the single aircraft identifier code, identifying that activation code as not valid.

The method may further comprise either, if the payload is activated, sending, from the first module to the second module, an indication that the payload has been activated, or, if the payload is not activated, sending, from the first module to the second module, an indication that the payload has not been activated and at least part of the activation code that has been determined not to be valid.

The unmanned vehicle may be an aircraft.

The payload may be a weapon.

In a further aspect, the present invention provides apparatus comprising a first module and a second module, wherein: the first module is mounted on an unmanned vehicle; the first module is arranged to act upon a payload, the payload being mounted on the unmanned vehicle upon which the first module is mounted and, under an action of the first module, able to be activated; the second module is remote from the unmanned vehicle upon which the first module is mounted; the second module is configured to receive an instruction that the payload is to be activated, in response to receiving the instruction, generate a plurality of activation codes, and send, to the first module, the plurality of activation codes; the first module is configured to determine whether or not each of the received activation codes is valid by performing a validation process, and either, in response to determining that each of the received activation codes is valid, activate the payload, or, in response to determining that one or more of the received activation codes is not valid, prevent or oppose activation of the payload; each of the activation codes comprises a first portion, a second portion, and a third portion; the first portion of an activation code is dependent upon a time at which that activation code is generated; a second portion of an activation code is a code that, once used to generate an activation code, is prevented from being used to generate subsequent activation codes at least for some period of time; and a third portion of an activation code is an identifier for the unmanned vehicle.

In a further aspect, the present invention provides a program or plurality of programs arranged such that when executed by a computer system or one or more processors it/they cause the computer system or the one or more processors to operate in accordance with any of the above aspects.

In a further aspect, the present invention provides a machine readable storage medium storing a program or at least one of the plurality of programs according to the preceding aspect.

### BRIEF DESCRIPTION OF THE DRAWINGS

Figure 1 is a schematic illustration (not to scale) of an example scenario;
Figure 2 is a schematic illustration (not to scale) of an aircraft;
Figure 3 is a schematic illustration (not to scale) of a payload control module;
Figure 4 is a schematic illustration (not to scale) of a ground station;
Figure 5 is a schematic illustration (not to scale) of a code generation module;
Figure 6 is a process flow chart showing certain steps of a process in which the payload control module is implemented;
Figure 7 is a process flow chart showing certain steps of the process of generating a payload activation signal; and
Figure 8 is a process flow chart showing certain steps of the process of determining whether or not the payload is to be activated.

### DETAILED DESCRIPTION

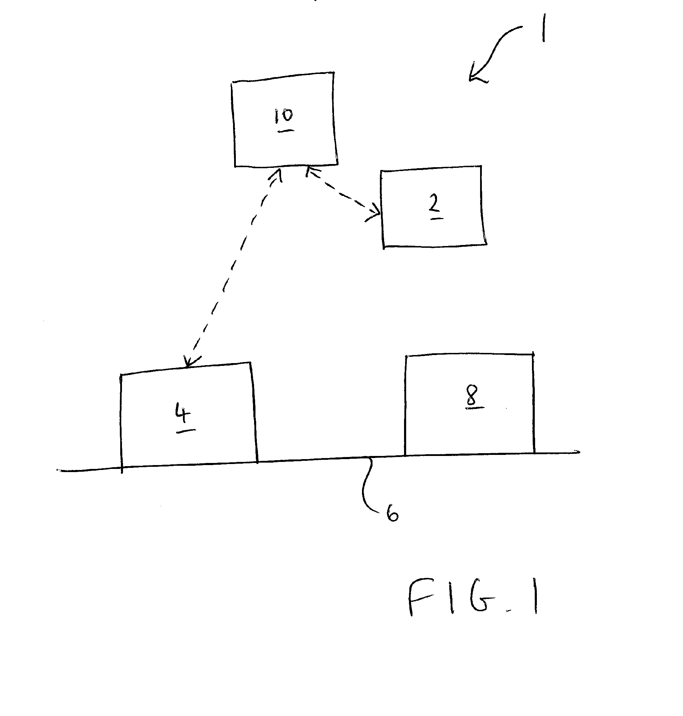

Figure 1 is a schematic illustration (not to scale) of an example scenario 1 in which an aircraft 2 implements an embodiment of an aircraft weapon system.

In this scenario 1, the aircraft 2 is an unmanned aircraft (UAV).

In this scenario 1, the aircraft 2 has been launched under the control of a ground station 4.

In this scenario 1, the ground station 4 is located on the ground 6.

Figure 1 shows the aircraft 2 airborne (i.e. after its launch from the ground 6).

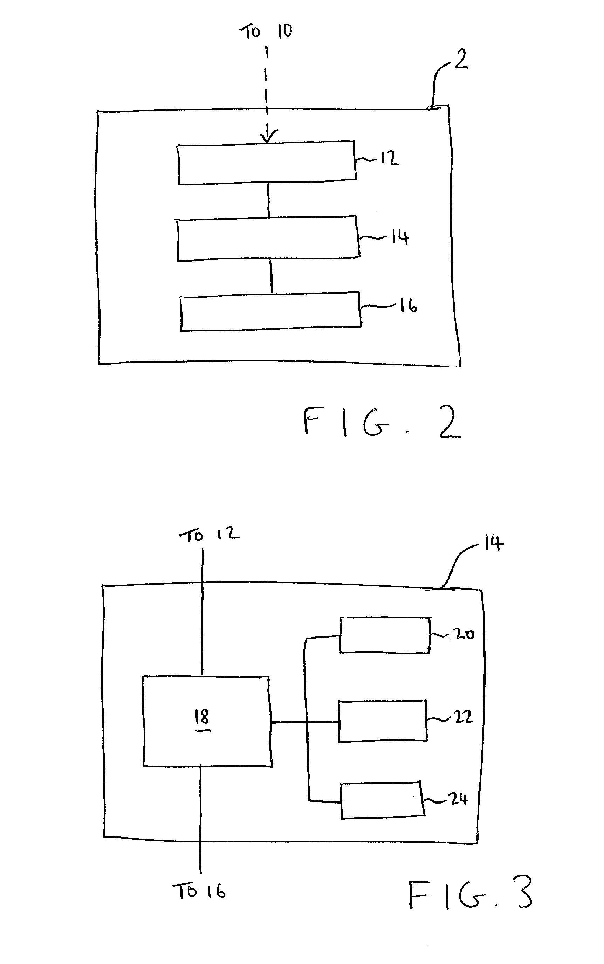

In this scenario 1, the aircraft 2 is launched under the control of the ground station 4 with an intention of releasing a payload for delivery to a target 8. The payload and its delivery to the target 8 is described in more detail later below with reference to Figures 2 to 6. In this embodiment, the aircraft 2 follows a pre-programmed navigation route. The aircraft 2 does not deviate from this route unless the aircraft 2 is commanded to "loiter" by the ground station 4, the aircraft is commanded to "return" by the ground station 4, or the aircraft 2 experiences a communications failure (in which case the aircraft 2 returns to the ground 6).

In this scenario 1, the target 8 is located on the ground 6. Also, the target 8 is located at a position on the ground 6 that is remote from the ground station 4.

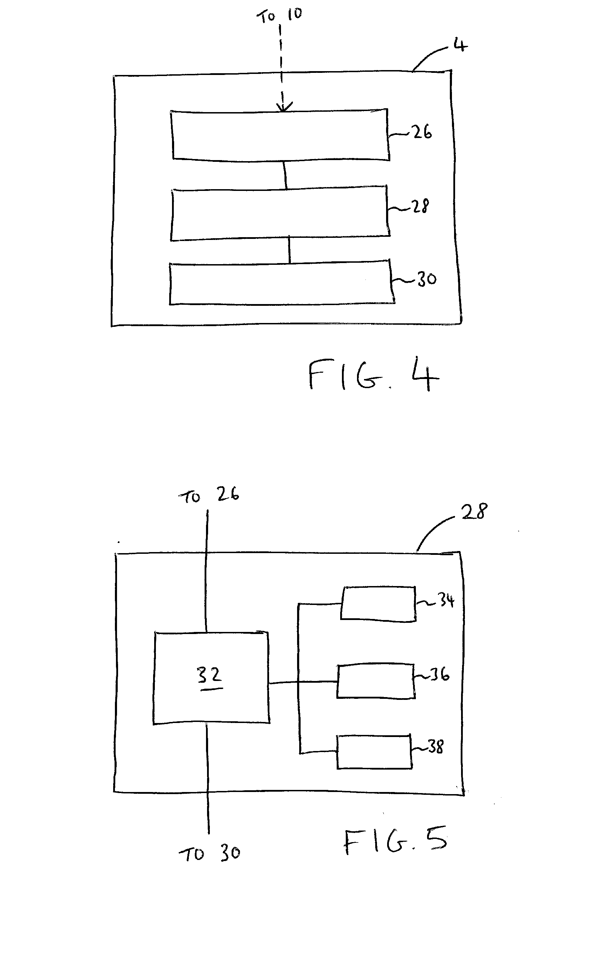

In this scenario 1, the aircraft 2 and the ground station 4 are in two-way communications. The aircraft 2 and the ground station 4 communicate via a communications satellite, hereinafter referred to as "the satellite 10". The two-way communication of the aircraft 2 and the ground station 4 is represented in Figure 1 by dotted two-headed arrows. Also, the two-way communication of the aircraft 2 and the ground station 4 is described in more detail later below with reference to Figure 4.

Figure 2 is a schematic illustration (not to scale) of the aircraft 2.

In this embodiment, the aircraft 2 comprises a first transceiver 12, a payload control module 14 and a payload 16.

In this embodiment, messages received by the aircraft 2 from the ground station 4 (via the satellite 10) are received by the first transceiver 12. Furthermore, in this embodiment, messages sent by the aircraft 2 to the ground station 4 (via the satellite 10) are sent by the first transceiver 12.

In this embodiment, the first transceiver 12 is connected to the payload control module 14 such that messages received by the first transceiver 12 from the ground station 4 (via the satellite 10) are sent from the first transceiver 12 to the payload control module 14. Furthermore, the first transceiver 12 is connected to the weapon system 14 such that messages may be sent from the payload control module 14 to the first transceiver 12, which may then be sent from the first transceiver 12 to the ground station 4 (via the satellite 10).

The payload control module 14 is described in more detail later below with reference to Figure 3. The payload control module 14 is connected to the payload 16 such that the payload control module 14 may activate the payload 16. Activation of the payload 16 may, for example, including powering the payload 16, releasing the payload 16 from the aircraft 2, and/or controlling the payload 16 as it travels from the aircraft 2 to the target 8.

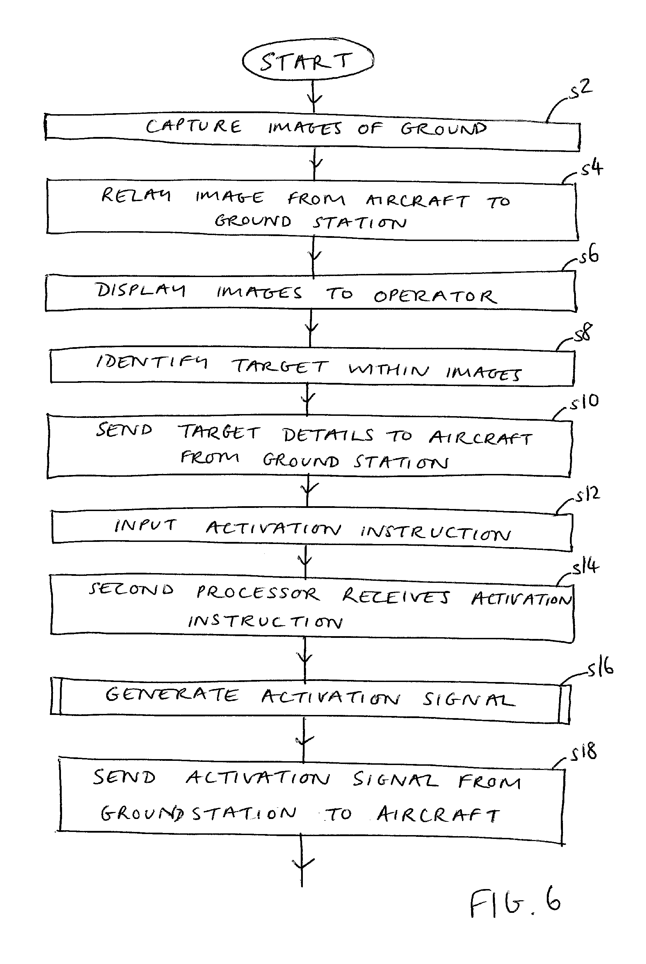

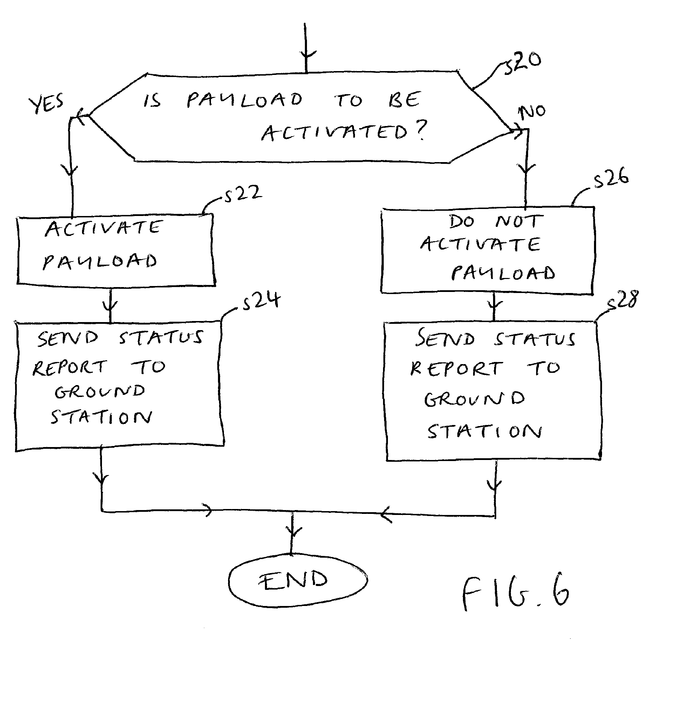

As described in more detail later below with reference to Figure 6, in operation the payload control module 14 processes messages (e.g. an activation signal) received by it from the ground station (via the first transceiver 12). This processing is performed to determine whether or not the payload 16 should be activated (e.g. released by the aircraft 2 such that it may be delivered to the target 8). If the payload control module 14 determines that the payload 16 is to be activated, the payload control module 14 activates the payload 16. Activation of the payload by the payload control module 14 may comprise controlling the payload 16 until (and in some embodiments after) its delivery to the target 8.

The payload 16 may be any appropriate type of payload. For example, in some embodiments, the payload 16 is a weapon e.g. a relatively lightweight, precision strike, low collateral damage weapon, or a different type of lethal effector, such as an unpowered laser guided bomb. In some embodiments, the payload is a weapon that uses any appropriate means to be guided to the target 8, e.g. the weapon may be a "beam rider" weapon, or the weapon may detect reflected laser light on the ground and steer towards that. In some embodiments the payload is a non-lethal effector, e.g. a communications jamming device, a locator beacon, or equipment or supplies for friendly ground-based troops.

Figure 3 is a schematic illustration (not to scale) of the payload control module 14.

The payload control module 14 comprises a first processor 18, a first timer 20, a first code repository 22, and a second code repository 24.

In this embodiment, the first processor 18 is coupled to the first transceiver 12 such that information (e.g. a message received by the first transceiver 12 from the ground station 4) may be sent between the first processor 18 and the first transceiver 12. Also, the first processor 18 is coupled to the payload 16 such that information (e.g. an activation signal generated by the first processor 18) may be sent between the first processor 18 and the payload 16.

In addition to being coupled to the first transceiver 12 and the payload 16, in this embodiment the first processor 18 is coupled to the first timer 20, the first code repository 22, and the second code repository 24. These couplings are such that the first processor 18 may acquire (i.e. may be sent, or may retrieve) information stored by, or generated by, the first timer 20, the first code repository 22, and the second code repository 24.

In this embodiment, in operation the first processor 18 uses information received by it from the first transceiver 12 (i.e. an activation signal received by the aircraft 2 from the ground station 4), and information acquired by the first processor 18 from the first timer 20, the first code repository 22, and the second code repository 24, to determine whether or not the payload is to be activated.

In this embodiment, the first timer 20 is configured to generate a time code. The time code is a code that is dependent upon the current time. In this embodiment, the first timer 20 generates an incrementing time code, and a time code output by the first timer 20 (for use by the first processor 18) is dependent upon the current time. The first timer 20 is time synchronised with a second timer (which is described in more detail later below with reference to Figure 5). As described in more detail later below with reference to Figure 6, the time code generated by the first timer 20 is acquired and used by the first processor 18 to determine whether or not the payload 16 is to be activated.

In this embodiment, the first code repository 22 comprises a plurality of predetermined "single-use codes". The terminology "single-use code" is used to refer to a code that can only be used once per aircraft sortie, as described in more detail later below. In this embodiment, each single-use code is a fixed code (i.e. it is not dependent upon time).

In this embodiment, prior to the launch of the aircraft 2 (i.e. prior to the aircraft 2 taking off from the ground 6) a storage device containing the first code repository 22 is hardwired or connected to (e.g. plugged into) a port of the first processor 18 such that the first processor 18 may acquire the single-use codes stored by the first code repository 22.

As described in more detail later below, the same plurality of predetermined single-use codes is also stored in a third code repository which is located at the ground station 4. Thus, the single-use codes stored within the aircraft and by the ground station 4 are "synchronised". In some embodiments, the single-use codes are synchronised between the ground station 4 and the aircraft 2 in a different manner, e.g. by transmitting the single-use codes via the satellite 10, whilst the aircraft 2 is on the ground 6.

As described in more detail later below with reference to Figure 6, the single-use codes stored by the first code repository 22 are acquired and used by the first processor 18 to determine whether or not the payload 16 is to be activated.

In this embodiment, the second code repository 24 comprises a "sortie code". In this embodiment, the sortie code is a "multi-use code", i.e. a code that may be used more than one time per aircraft sortie (e.g. in multiple different commands for the aircraft 2 in a single sortie). The sortie code is a fixed code (i.e. it is not dependent upon time).

In this embodiment, prior to the launch of the aircraft 2 (i.e. prior to the aircraft 2 taking off from the ground 6) a storage device containing the second code repository 24 is hardwired, or connected (e.g. plugged into) a port of the first processor 18 such that the first processor 18 may acquire the sortie code stored by the second code repository 24.

As described in more detail later below, the same sortie code is also stored in a fourth code repository which is located at the ground station 4. Thus, the sortie codes stored within the aircraft and the by the ground station 4 are "synchronised". In some embodiments, the sortie codes are synchronised between the ground station 4 and the aircraft 2 in a different manner, e.g. by transmitting the sortie code via the satellite 10, whilst the aircraft 2 is on the ground.

As described in more detail later below with reference to Figure 6, the sortie code stored by the second code repository 24 is acquired and used by the first processor 18 to determine whether or not the payload 16 is to be activated.

Figure 4 is a schematic illustration (not to scale) of the ground station 4.

In this embodiment, the ground station 4 comprises a second transceiver 26, a code generation module 28 and a user interface 30.

In this embodiment, messages sent from the ground station 4 to the aircraft 2 (via the satellite 10) are sent by the second transceiver 26. Furthermore, in this embodiment messages sent by the aircraft 2 and received by the ground station 4 (via the satellite 10) are received by the second transceiver 26.

In this example, the second transceiver 26 is connected to the code generation module 28 such that messages (e.g. an activation signal) may be sent from the code generation module 28 to the second transceiver 26, which may then be sent from the second transceiver 26 to the first transceiver 12 of the aircraft 2 (via the satellite 10). Furthermore, the second transceiver 26 is connected to the code generation module 28 such that messages received by the second transceiver 26 from the aircraft 2 (via the satellite 10) may be sent from the second transceiver 26 to the code generation module 28.

The code generation module 28 is described in more detail later below with reference to Figure 5. In addition to being connected to the second transceiver 26, the code generation module 28 is connected to the user interface 30 such that information may be sent between the code generation module 28 and the user interface 30. For example, a human operator may input information using the user interface 30 which is then sent to the code generation module 28. Also for example, information may be sent from the code generation module 28 to the user input 30 e.g. for display to the human operator.

The user interface 30 may be any appropriate type of user interface using which a human operator may input information to the code generation module 28. For example, the user interface 30 may comprise a keyboard, a mouse controller, a voice recognition module, a display (e.g. a touch-screen display), etc.

As described in more detail later below with reference to Figure 6, in operation, using the user interface 30, a human operator inputs an instruction which is received by the code generation module 28. This instruction is an instruction that the payload 16 on board the aircraft 2 is to be activated. The code generation module 28 is configured to, in response to receiving the input instruction, generate an "activation signal" for the payload 16, i.e. a signal specifying that the payload is to be activated. The activation signal is then sent from the code generation module 28, by the second transceiver 26, to the aircraft 2.

Figure 5 is a schematic illustration (not to scale) of the code generation module 28.

The code generation module 28 comprises a second processor 32, a second timer 34, the third code repository 36, and the fourth code repository 38.

In this embodiment, the second processor 32 is coupled to the second transceiver 26 such that information (e.g. an output of the second processor 32 i.e. an activation signal) may be sent between the second processor 32 and the second transceiver 26. Also, the second processor 32 is coupled to the user interface 30 such that information (e.g. an instruction specifying that the payload 16 is to be activated) may be sent between the user interface 30 and the second processor 32.

In addition to being coupled to the second transceiver 26 and the user interface 30, in this embodiment the second processor 32 is coupled to the second timer 34, the third code repository 36, and the fourth code repository 38. These couplings are such that the second processor 32 may acquire (i.e. may be sent, or may retrieve) information stored by, or generated by, the second timer 34, the third code repository 36, and the fourth code repository 38.

In this embodiment, in operation, the second processor 32 uses information acquired from the second timer 34, the third code repository 36, and the fourth code repository 38 to generate an activation signal to be sent to the aircraft 2 via the second transceiver 26.

In this embodiment, the second timer 34 is configured to generate an incrementing time code (i.e. a code that is dependent upon the current time) in the same way as is the first timer 20. The second timer 34 is time synchronised with the first second timer 20 (i.e. for a given time, the time codes generated by the first and second timers 20, 34 are identical). As described in more detail later below with reference to Figure 6, the time code generated by the second timer 34 is acquired and used by the second processor 32 to generate the activation signal.

In this embodiment, the third code repository 36 comprises at least the same plurality of predetermined single-use codes that are contained within the first code repository 22. In other words, the single-use codes stored within the first code repository 22 in the aircraft 2 are the same as those stored in the third code repository 36 at the ground station 4. In other words, the first and third code repositories 22, 36 are "synchronised". The single-use codes may be synchronised between the ground station 4 and the aircraft 2 in any appropriate manner.

As described in more detail later below with reference to Figure 6, the single-use codes stored by the third code repository 36 are acquired and used by the second processor 32 to generate the activation signal.

In this embodiment, the fourth code repository 38 comprises the same "sortie code" as that stored in the second code repository 24, i.e. the sortie code corresponding to the aircraft 2. In other words, the sortie code stored within the second code repository 24 on the aircraft 2 is the same as one of those stored in the fourth code repository 38 at the ground station 4. In other words, the second and fourth code repositories 24, 38 are "synchronised". The sortie codes may be synchronised between the ground station 4 and the aircraft 2 in any appropriate manner.

The fourth code repository 38 may additionally comprise identification information for the aircraft 2, which may be associated with sortie code of the aircraft 2. In some embodiments, the fourth code repository 38 comprises sortie codes (and identification information) corresponding to other aircraft.

In this embodiment, the sortie code corresponding to the aircraft 2 (and stored within the second and fourth code repositories 24, 38) is unique to that aircraft 2 (i.e. no other aircraft is associated with or has the same sortie code as the aircraft 2). In other words, the sortie code for the aircraft 2 stored within the second and fourth code repositories 24, 38 is a unique identifier for that aircraft 2.

As described in more detail later below with reference to Figure 6, the sortie code stored by the first code repository 22 is acquired and used by the first processor 18 to determine whether or not the payload 16 is to be activated.

Figure 6 is a process flow chart showing certain steps of a process for implementing the payload control module 14.

In this embodiment, the aircraft 2 is airborne following its launch from the ground 6, as described above with reference to Figure 1.

At step s2, as the aircraft 2 flies above the ground 6, images of the ground 6 are captured by the aircraft 2 using an aircraft-mounted camera (not shown in the Figures).

At step s4, the captured images of the ground 6 are relayed from the first transceiver 12 of the aircraft 2 to the ground station 4. In this embodiment, these images are sent via the satellite 10.

At step s6, the camera images received at the ground station 4 are displayed (e.g. using the user interface 30) to a human operator at the ground station 4.

At step s8, the operator identifies the target 8 within the displayed images.

At step s10, the operator sends details about the target 8 (e.g. a global position of the target 8) from the ground station 4 to the aircraft 2 (i.e. to the first processor 18 of the aircraft 2).

In this embodiment, these target details are sent via the satellite 10.

Steps s2 to s10 describe an example method by which the UAV 2 may acquire target data (i.e. a location of the target 8 on the ground 6, e.g. a global position of the target 8). In other embodiments, target data may be acquired by the ground station 4 and/or the UAV 2 using a different appropriate method. For example, in other embodiments, target data may be sent to the ground station 4 and/or the UAV 2 from another asset (e.g. a different UAV) e.g. via a data-link. In other embodiments, target data may be acquired using one or more non-imaging sensors. In other embodiments, target data may be acquired using one or more radar antennas. In other embodiments, target data may be derived from intelligence data, and that target data may be transferred to the UAV 2 during tasking of the UAV 2.

At step s12, using the user interface 30, the operator inputs an instruction that the payload 16 is to be activated (e.g. delivered to the target 8).

In some embodiments, prior to the process of initiating the payload 16 (i.e. prior to step s12), the payload 16 may be selected for activation (e.g. if the UAV 2 is carrying a plurality of different payloads) and configured for activation.

At step s14, the instruction that the payload 16 is to be activated is received, from the user interface 30, by the second processor 32.

At step s16, in response to receiving the instruction that the payload 16 is to be activated, the second processor 32 generates an activation signal comprising a plurality of different activation codes.

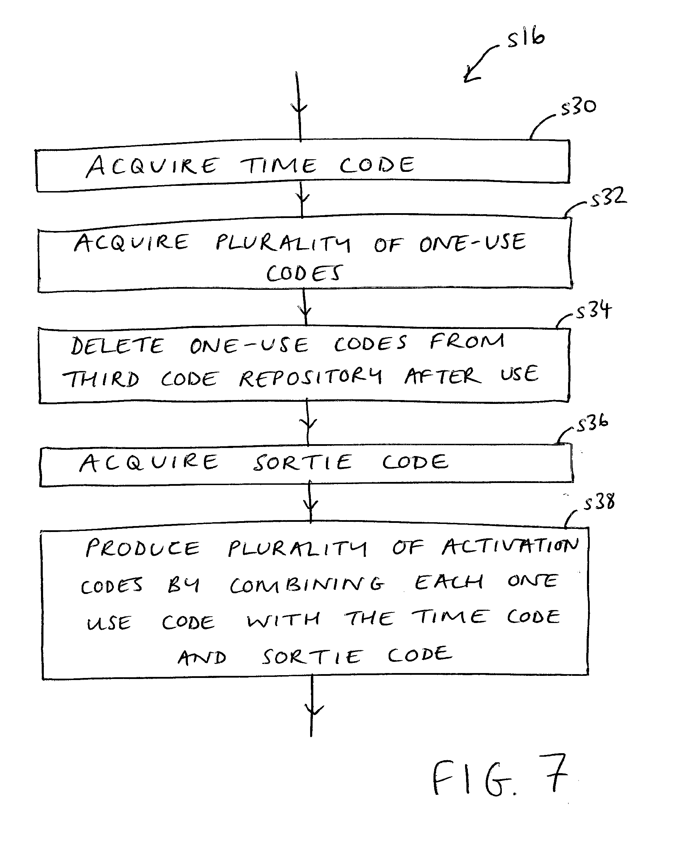

The process of generating the activation signal is described in more detail later below with reference to Figure 7.

At step s18, the activation signal (comprising the plurality of activation codes) is sent, from the second processor 32 of the code generation module 28, to the first processor 18 of the payload control module 14 (via, in turn, the second transceiver 26, the satellite 10, and the first transceiver 12).

At step s20, the first processor 18 processes the received activation signal to determine whether or not the payload 16 is to be activated. In this embodiment, the process of determining whether or not the payload 16 is to be activated comprises validating, or otherwise, each of the activation codes included in the activation signal that is received by the first processor 18.

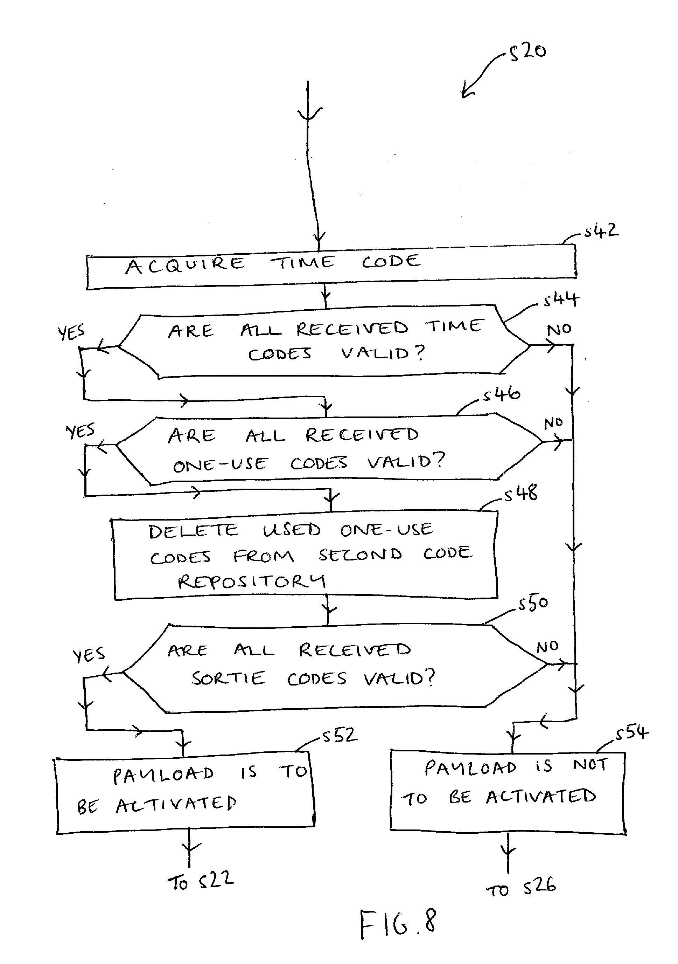

The process of determining whether or not the payload 16 is to be activated is described in more detail later below with reference to Figure 8.

If, at step s20, it is determined by the first processor 18 that the payload is to be activated, the process proceeds to step s22.

However, if, at step s20, it is determined by the first processor 18 that the payload is not to be activated, the process proceeds to step s26.

At step s22, the first processor 18 activates the payload 16. Activation of the payload 16 may include any appropriate processes such as providing power to the payload 16 (i.e. "powering up" the payload 16), releasing the payload 16 from the aircraft 2 so that the payload can move away from the aircraft 2, and/or controlling (e.g. steering or guiding) the payload 16 towards the target 8.

Also, in some embodiments, the target details transmitted to the first processor 18 at step s10 may be used to control the payload 16 (e.g. to control or steer the payload after its release from the aircraft 2, such that the payload travels to the target 8).

At step s24, the first processor 18 generates a status report and transmits the generated status report to the ground station (via the first transceiver 12, the satellite 10, and the second transceiver 26), where it may be displayed to the operator using the user interface 30.

Preferably, the status report generated and displayed to the operator at step s24 comprises a confirmation that the payload 16 has been activated. The status report generated and displayed to the operator at step s24 may also comprise any appropriate additional information such as a status for the payload 16, a confirmation that the payload has reached the target 8, etc. In some embodiments, the aircraft-mounted camera is used to provide a visual aid for confirming that the payload 16 has been activated/reached the target 8.

In this embodiment, if for some reason the payload 16 is not activated despite (at step s22) the first processor 18 attempting to activate the payload 16, the payload control module 14 reports this via the first transceiver 12 to the ground station 4. This report is sent via satellite 10.

After performing step s24, the process for implementing the payload control module 14 ends.

Returning now to step s20, if at this step it is determined by the first processor 18 that the payload is not to be activated 16, the process proceeds to step s26.

At step s26, the first processor 18 does not activate the payload 16. Moreover, in this embodiment, the first processor 18 prevents or opposes activation of the payload 16 (e.g. by actively putting in place safeguards to prevent activation of the payload 16 until a valid activation signal, i.e. a plurality of valid activation codes, is received by the first processor 18).

At step s28, the first processor 18 generates a status report and transmits the generated status report to the ground station (via the first transceiver 12, the satellite 10, and the second transceiver 26), where it may be displayed to the operator using the user interface 30.

Preferably, the status report generated and displayed to the operator at step s28 comprises a notification that the payload 16 has not been activated. The status report generated and displayed to the operator at step s28 may also comprise any appropriate additional information such as a status for the payload 16, a notification that an activation code received by the first processor 18 is invalid, the (invalid) activation code(s) that was received by the first processor 18 at step s18, the target details that have been received by the first processor 18, etc.

After performing step s28, the process for implementing the payload control module 14 ends.

Thus, a process for implementing the payload control module 14 is provided.

Figure 7 is a process flow chart showing certain steps of the process of generating the activation signal (that includes the plurality of activation codes) performed at step s16 of the process of Figure 6.

At step s30, in response to receiving the instruction that the payload 16 is to be activated, the second processor 32 acquires a time code (that is dependent upon the current time) from the second timer 34.

At step s32, also in response to receiving the instruction that the payload 16 is to be activated, the second processor 32 acquires a plurality of single-use codes from those stored in the third code repository 36. In this embodiment, each of the plurality of single-use codes is a different code.

At step s34, after acquiring the single-use codes from the third code repository 36, each of the single-use codes that have been acquired by the second processor 32 from the third code repository 36 is deleted from the third code repository 36.

Thus, for a given aircraft sortie or mission, when generating an activation code, a single-use code that has been used to generate an activation code during that aircraft sortie or mission cannot be re-used to generate a subsequent activation code during that aircraft sortie or mission.

In some embodiments, previously used single-use codes are not deleted from the third code repository 36, but are in some other way discounted from future selection for the current aircraft sortie.

At step s36, also in response to receiving the instruction that the payload 16 is to be activated, the second processor 32 acquires the relevant sortie code from the fourth code repository 38 (i.e. the sortie code that corresponds to the aircraft 2 upon which the payload 16 to be activated is carried). Aircraft identification information associated with the sortie codes stored in the fourth code repository 38 may be used to identify which of the sortie codes stored within the fourth code repository is to be acquired by the second processor 32.

Thus, at step s32, a sortie code that corresponds only to the aircraft 2 (and no other aircraft) is acquired by the second processor 32.

At step s38, for each of the plurality of single-use codes acquired by the second processor 32 at step s32, the second processor 28 combines that single-use code with both the time code (acquired at step s30) and the sortie code (acquired at step s36).

Combining a single-use code, the time code, and the sortie code may be performed in any appropriate process such that the resulting combination is dependent upon each of the single-use code, the time code, and the sortie code. Suitable code combination processes include, but are not limited to, performing a concatenation process (to concatenate the single-use code, the time code, and the sortie code), or a convolution process (to convolve the single-use code, the time code, and the sortie code), etc.

Each combination of a single-use code, the time code, and the sortie code is an activation code. Thus, at step s38, a plurality of different activation codes is generated.

Thus, a method of generating the activation signal (that includes the plurality of activation codes) performed at step s16 of the process of Figure 6 is provided.

Figure 8 is a process flow chart showing certain steps of the process of determining whether or not the payload 16 is to be activated performed at step s20 of the process of Figure 6.

At step s42, the first processor 18 acquires a time code (that is dependent upon the current time) from the first timer 14.

At step s44, for each of the activation codes, the first processor 18 validates or otherwise the time code of that activation code. This may be performed by, for each activation code, comparing the time code of that activation code with the time code acquired at step s42.

If the comparison of a time code of an activation code with the time code acquired at step s42 codes indicates that the time delay between that activation code being generated by the second processor 32 and received by the first processor 18 is less than a predetermined threshold, then that time code is validated. However, if the comparison indicates that the time delay is greater than or equal to the predetermined threshold then that time code is declared "invalid". This tends to alleviate problems caused by the firing code command being kept in the aircraft data buffer for several minutes prior to it being processed by first processor 18. Thus, a problem of the payload 16 receiving a significantly delayed activation command tends to be reduced.

If at step s44, each of the time codes is validated, the method proceeds to step s46. However, if one or more of the time codes is declared invalid, the method proceeds to step s54.

At step s46, for each of the activation codes, the first processor 18 validates or otherwise the single-use code of that activation code. This may be performed by, for each activation code, comparing the single-use code of that activation code with the single-use codes stored in the first code repository 22.

In this embodiment, a single-use code is validated if it matches a single-use code stored within the first code repository 22. Also, a single-use code is declared invalid if it does not match a single-use code stored within the first code repository 22.

If at step s46, each of the single-use codes is validated, the method proceeds to step s48. However, if one or more of the single-use codes is declared invalid, the method proceeds to step s54.

At step s48, after validating the single-use codes of each of the activation codes, each of those single-use codes is deleted from the first code repository 22. In other words, each of the single-use codes within the first code repository 22 that has been matched to a single-use code of an activation code is deleted from the first code repository 22. In some embodiments, previously used single-use codes are not deleted from the first code repository 22, but are in some other way discounted from future selection for the current aircraft sortie.

The deletion (or deactivation) of single-use codes from the first and/or third code repositories 22, 36 advantageously provides that a code can only be used once. This tends to provide that a repeated message (i.e. a repeated, e.g. resent, activation code or activation signal) would not trigger reactivation of the payload, or the activation of a further payload.

At step s50, for each of the activation codes, the first processor 18 validates or otherwise the sortie code of that activation code. This may be performed by, for each activation code, comparing the sortie code of that activation code with the sortie code stored in the second code repository 24.

In this embodiment, a sortie code is validated if it matches the sortie code stored within the second code repository 24. Also, a sortie code is declared invalid if it does not match a sortie code stored within the second code repository 24.

Each aircraft uses a unique sortie code (i.e. a sortie code that is not used by any other aircraft e.g. other aircraft in the same fleet as the aircraft 2, or other aircraft being controlled by the ground station 4). The use of such aircraft-specific sortie code tends to prevent payload activation being performed by a different aircraft that received an activation signal in error.

If at step s50, each of the single-use codes is validated, the method proceeds to step s52. However, if one or more of the single-use codes is declared invalid, the method proceeds to step s54.

At step s52, the time code, single-use code, and sortie code of each of the activation codes has been validated and the first processor 18 determines that the payload is to be activated. The process then proceeds to step s22 of Figure 6.

At step s54, one or more of the time code, single-use code, and/or sortie code of one or more of the activation codes has been declared invalid, and the first processor 18 determines that the payload is not to be activated. The process then proceeds to step s26 of Figure 6.

Thus, the process of determining whether or not the payload 16 is to be activated, as performed at step s20 of the process of Figure 6, is provided.

An advantage provided by the above described system and method is that the payload control module is configured to generate a status report and transmit that status report to the ground station (e.g. for analysis by an operator). The generated status report may include status information for any of the components of the payload control module (e.g. the first processor) and/or status information for the payload. Thus, any failures of the payload delivery system that occur tend to be easy to identify and plan for. For example, if the payload is activated but not successfully delivered to the target, the payload control module reports to the ground station that this event has occurred. Any relevant data may also be reported to the ground station 4.

A further advantage of the above described system and method is that a fully autonomous vehicle is used to deliver payloads to a target. Thus, a human operator on the vehicle (i.e. a pilot) is not used, and the risks to such an operator are negated. Nevertheless, in the event of an emergency, manual control of the aircraft may be reverted to. A further advantage of the above described system is that the aircraft can be fitted with a variety of different payloads depending on the requirements of the scenario.

The above described system and method tends to provide for real time monitoring of the state of the payload and its control system.

The satellite link between the ground station and the aircraft advantageously tends to provide for Beyond Line Of Sight (BLOS) communication. In other embodiments, a different type of data link, e.g. a Line Of Sight (LOS) data link, is used instead of or in addition to the BLOS data link.

A further advantage provided by the above described system and method is that end-to-end control of the payload and its delivery system tends to be maintained even when the data link employed (between the ground station and the aircraft) has uncertain performance, availability, and integrity.

Apparatus, for implementing the arrangement described above with reference to Figures 1 to 5, and performing the method steps described above with reference to Figures 6 to 8, may be provided by configuring or adapting any suitable apparatus, for example one or more computers or other processing apparatus or processors, and/or providing additional modules. The apparatus may comprise a computer, a network of computers, one or more processors, or one or more field-programmable gate arrays, for implementing instructions and using data, including instructions and data in the form of a computer program or plurality of computer programs stored in or on a machine readable storage medium such as computer memory, a computer disk, ROM, PROM etc., or any combination of these or other storage media.

It should be noted that certain of the process steps depicted in the flowchart of Figures 6 to 8 and described above may be omitted or such process steps may be performed in differing order to that presented above and shown in Figures 6 to 8. Furthermore, although all the process steps have, for convenience and ease of understanding, been depicted as discrete temporally-sequential steps, nevertheless some of the process steps may in fact be performed simultaneously or at least overlapping to some extent temporally.

Optionally, a new set of single-use codes may be used for each new aircraft sortie.

Optionally, a new sortie code may be used for each new aircraft sortie.

In the above embodiments, the payload delivery/control system is implemented in the particular scenario described above with reference to Figure 1. However, in other embodiments the system is implemented in a different scenario. For example, in other embodiments, the scenario in which the system is implemented comprises a different number of aircraft, ground stations, satellites, and/or targets that interact in the same or a different appropriate way to that described above.

In the above embodiments, the autonomous vehicle used to deliver the payload is an aircraft. However, in other embodiments the vehicle is a different type of autonomous vehicle, for example, an autonomous land-based or water-based vehicle.

In the above embodiments, communications between the ground station and the aircraft are via a single satellite. However, in other embodiments the ground station and the vehicle communicate in a different way, for example, via a different number of satellites, or directly, or using an airborne relay.

In the above embodiments, the aircraft follows a pre-programmed navigation route. However, in other embodiments the vehicle may follow a different type of route, for example a series of way-points may be uploaded to the aircraft while the aircraft is airborne, or the aircraft may determine its own route.

In the above embodiments, the activation codes received by the payload control module are separated into their constituent time, single-use, and sortie codes. In order to validate or otherwise an activation code, the constituent codes of that activation code are compared to codes generated or stored in the payload control module. However, in other embodiment, an activation code may be validated in a different way. For example, in some embodiments, in response to receiving activation codes, the second processor may produce a further set of activation codes by combining the current time code, a single-use code, and a sortie code. This further set of activation codes may then be compared to the received set of activation codes. If each of the received activation codes matches with an activation code from the further set, then the received activation signal is validated. Otherwise, the received activation signal is declared invalid. The first processor may delete or disable (from the second code repository) those single-use codes that formed a further activation signal that was matched to a received activation signal.

In other embodiments, two respective sets of activation codes (i.e. two respective activation signals) can be relayed to the aircraft from two respective ground stations. The first processor (or equivalent) may compare the two received codes in order to validate an activation instruction.

In the above embodiments, the activation signal comprises a plurality of different activation codes (that have been produced using a plurality of different single-use codes). However, in other embodiments, the activation signal comprises a plurality of activation codes that are identical to each other. In other words, in some embodiments, a single single-use code is acquired by the second processor and used to generate a plurality of copies of the same activation code. Use of a system in which multiple activation codes have to be validated before a payload can be activated advantageously tend to reduce the likelihood of a payload being activated e.g. due to electronic failure.

Preferably, each of the plurality of activation codes is produced using a different single-use code. This is particularly preferable in scenarios in which activating the payload is expensive and/or a lethal effector as it reduces the risk of a payload being activated inadvertently.

The above described method and apparatus is particularly useful for control/activating a payload onboard an unmanned vehicle. Data links employed to provide communication between an unmanned aircraft and its operator, e.g. a satellite data-link, may have uncertain performance, availability, and integrity. Use of multiple activation codes tends to reduce the risk of an unwanted payload activation resulting from an unreliable communications link between an unmanned aircraft and its operator.

In the above embodiments, the ground station is located on the ground. However, in other embodiments, the ground station, i.e. a location that the operator that controls the aircraft's weapon systems is at, is located at a different location remote from the aircraft, e.g. in a different aircraft or other vehicle.

In the above embodiments, an aircraft-mounted camera is used to capture images of the ground for use by the operator at the ground station. However, in other embodiments, a different type of sensor (mounted on the aircraft or remote from the aircraft) is used to provide data to the operator for the purpose of target selection. For example, a visible light-detecting camera, an infra-red camera, a ultra-violet camera, a radar sensor, etc. may be used.

## Claims

1. A method performed by apparatus, the apparatus comprising a first module (18) and a second module (32), the first module being mounted on an unmanned vehicle (2) and arranged to act upon a payload (16), the payload (16) being mounted on the unmanned vehicle (2) upon which the first module (18) is mounted and, under an action of the first module (18), able to be activated, the second module (32) being remote from the unmanned vehicle (2) upon which the first module (18) is mounted, the method comprising:
receiving, by the second module (32), an instruction that the payload (16) is to be activated;
in response to receiving the instruction, generating, by the second module (32), a plurality of activation codes;
sending, from the second module (32) to the first module (18), the plurality of activation codes;
determining, by the first module (18), whether or not each of the received activation codes is valid by performing a validation process; and either
in response to determining that each of the received activation codes is valid, activating, by the first module (18), the payload (16); or
in response to determining that one or more of the received activation codes is not valid, preventing or opposing, by the first module (18), activation of the payload (16); wherein
each of the activation codes comprises a first portion, a second portion, and a third portion;
the first portion of an activation code is a dependent upon a time at which that activation code is generated;
a second portion of an activation code is a code that, once used to produce an activation code, is prevented from being used to produce a subsequent activation code at least for some period of time; and
a third portion of an activation code is an identifier for the unmanned vehicle (2).

2. A method according to claim 1, wherein each of the activation codes is different to each other activation code.

3. A method according to claim 2, wherein the second portion of each of the activation codes is different to the second portion of each of the other activation codes.

4. A method according to any of claims 1 to 3, wherein the step of generating the plurality of activation codes comprises, for each activation code, acquiring, by the second module (32), from a timer (34) operatively coupled to the second module and configured to generate a time incrementing code, as the first portion of that activation code, a time code.

5. A method according to any of claims 1 to 4, wherein the step of generating the plurality of activation codes comprises:
for each activation code, acquiring, by the second module (32) from a code repository (36) operatively coupled to the second module (32), as the second portion of that activation code, a single-use code; and
for each single-use code acquired by the second module (32), preventing or opposing that single-use code being subsequently acquired by the second module (32) at least for some period of time after the acquiring of that single-use code by the second module (32).

6. A method according to any of claims 1 to 5, wherein the step of generating the plurality of activation codes comprises, for each activation code, using information for specifying the unmanned aircraft (2), acquiring, by the second module (32) from a further code repository (38) operatively coupled to the second module (32), as the third portion of that activation code, a code that can be used for uniquely identifying the unmanned aircraft (2).

7. A method according to any of claims 1 to 6, wherein the step of determining whether or not each of the received activation codes is valid comprises:
in response to receiving the activation codes, acquiring, by the first module (18) from a timer (20) operatively coupled to the first module (18) and configured to generate a time incrementing code, a time code indicative of a time that the activation codes are received by the first module (18);
for each activation code, comparing, by the first module (18), the first portion of that activation code with the acquired time code that is indicative of a time that the activation codes are received by the first module (18); and
for each activation code, if the comparison indicates that a time period between a time at which that activation code was generated and a time at which that activation code was received by the first module (18) is greater than a predetermined threshold value, identifying that activation code as not valid.

8. A method according to any of claims 1 to 7, wherein the step of determining whether or not each of the received activation codes is valid comprises:
in response to receiving the activation codes, acquiring, by the first module (18), from a code repository (22) operatively coupled to the first module (18), a plurality of predetermined codes;
for each activation code, comparing, by the first module (18), the second portion of that activation code with one or more of the acquired plurality of predetermined codes to determine whether or not that second portion is the same as at least one the acquired plurality of predetermined codes; and
for each activation code, if it is determined that the second portion of that activation code is not the same as any of the acquired plurality of predetermined codes, identifying that activation code as not valid.

9. A method according to any of claims 1 to 8, wherein the step of determining whether or not each of the received activation codes is valid comprises:
in response to receiving the activation codes, acquiring, by the first module (18), from a code repository (24) operatively coupled to the first module (18), a single code, the single code being an identifier for the unmanned aircraft (2);
for each activation code, comparing, by the first module (18), the third portion of that activation code with the single aircraft identifier code to determine whether or not that third portion is the same as the single aircraft identifier code; and
for each activation code, if it is determined that the third portion of that activation code is not the same as the single aircraft identifier code, identifying that activation code as not valid.

10. A method according to any of claims 1 to 9, wherein the method further comprises either:
if the payload (16) is activated, sending, from the first module (18) to the second module (32), an indication that the payload (16) has been activated; or
if the payload (16) is not activated activated, sending, from the first module (18) to the second module (32), an indication that the payload (16) has not been activated and at least part of the activation code that has been determined not to be valid.

11. A method according to any of claims 1 to 10 wherein the unmanned vehicle (2) is an aircraft.

12. A method according to any of claims 1 to 11 wherein the payload (16) is a weapon.

13. Apparatus comprising:
a first module (18); and
a second module (32); wherein
the first module (18) is mounted on an unmanned vehicle (2);
the first module (18) is arranged to act upon a payload (16), the payload (16) being mounted on the unmanned vehicle (2) upon which the first module (18) is mounted and, under an action of the first module (18), able to be activated;
the second module (32) is remote from the unmanned vehicle (2) upon which the first module (18) is mounted;
the second module (32) is configured to:
receive an instruction that the payload (16) is to be activated;
in response to receiving the instruction, generate a plurality of activation codes; and
send, to the first module (18), the plurality of activation codes;
the first module (18) is configured to:
determine whether or not each of the received activation codes is valid by performing a validation process; and either
in response to determining that each of the received activation codes is valid, activate the payload (16); or
in response to determining that one or more of the received activation codes is not valid, prevent or oppose activation of the payload (16);
each of the activation codes comprises a first portion, a second portion, and a third portion;
the first portion of an activation code is a dependent upon a time at which that activation code is generated;
a second portion of an activation code is a code that, once used to produce an activation code, is prevented from being used to produce subsequent activation codes at least for some period of time; and
a third portion of an activation code is an identifier for the unmanned vehicle (2).

14. A program or plurality of programs arranged such that when executed by a computer system or one or more processors it/they cause the computer system or the one or more processors to operate in accordance with the method of any of claims 1 to 12.

15. A machine readable storage medium storing a program or at least one of the plurality of programs according to claim 14.
